# EUROPEAN PATENT SPECIFICATION

(11) **EP 0 904 519 B1**
(45) Date of publication and mention of the grant of the patent: **11.04.2001**
(21) Application number: 97924824.2
(22) Date of filing: 06.06.1997
(51) Int. Cl.: F26B 3/088, F26B 23/02

(54) **System and a method for treating a refuse slurry**
System und Verfahren zum Trocknen von Schlamm-Abfall
Système et méthode de séchage des boues résiduaires

(30) Priority: 07.06.1996 CA 2178575; 15.11.1996 US 751025
(43) Date of publication of application: 31.03.1999
(73) Proprietor: Societe en Commandite Gaz Metropolitain, Montreal, Quebec H2K 2X3 (CA)
(72) Inventor: LEGROS, Robert, Pincourt, Quebec J7V 6Y7 (CA); CHAOUKI, Jamal, Pointe-Claire, Quebec H9S 4T8 (CA); BI, Xiao, Tao, Montreal, Quebec H3S 1P1 (CA); MACCHI, Arturo, Montreal, Quebec H3M 2J3 (CA); RATNANI, Kébir, Boucherville, Quebec J4B 7T9 (CA)
(74) Representative: Moncheny, Michel
(86) International application number: CA9700400
(87) International publication number: WO9747933

(56) References cited:
- EP-A- 0 134 354
- EP-A- 0 253 596
- EP-A- 0 331 111
- EP-A- 0 600 132
- WO-A-80/01407
- WO-A-92/01897
- DE-A- 2 501 268
- DE-U- 8 332 567
- FR-A- 2 171 363
- FR-A- 2 198 112
- FR-A- 2 466 439
- FR-A- 2 496 085
- GB-A- 728 868
- US-A- 3 805 715

## Description

### TECHNICAL FIELD

The present invention relates to a drying system according to the features of the preamble of claim 1 and to a method of treating a refuse slurry according to the preamble of claim 27.

Such a system, respectively method is known from WO-A-80/01 407.

### BACKGROUND ART

Animal manure and other related sewage slurries from animal farms need to be treated before being released to the land field to prevent the contamination of the underground water system and the spreading of diseases related to bacteria contained in the manure slurry. There exist two competitive types of processes for the treatment of manure slurry. The first type of process treats the slurry biologically in which the waste solution is digested via aerobic or anaerobic fermentation, then the treated slurry which has a water content around 80% is either applied to the land field, or further treated to reduce water content to about 10% and then used as fertilizers. The other type of process uses physical operations to treat the slurry in which the slurry is dried by direct or indirect contact with hot air or gas stream to evaporate the water, the generated solids have a moisture content of about 10% and can be used as fertilizers. The generated gas-vapor mixture is further treated to remove organic compounds and odor gases via incineration or wet scrubbing before it is released to the environment. In recent years, the amount of biologically digested sludge to be spread on the land field has been greatly limited due to the more strict regulations on environmental protection. Most of the digested slurry thus needs to be treated more thoroughly to remove naturally undegradable pollutants or to remove water to such a level that the solids sludge can be used as substitute fertilizers. As a result, the direct drying and granulation process becomes economically advantageous over the biological treatment process.

There exist several possible processes for the drying of animal manure slurry, such as the spray drying process described by Masters, K. (1972), "Spray drying", Leonard Hill Books, London; rotary drying process described by Glorioso (1993) in Canadian Patent 1,325,583; traveling grate drying process described by Bernes and Jensen (1991) in Canadian Patent 2,085,583; and fluidized bed dryer as described by Huttlin (1991) in Canadian Patent 2,000,299. To reduce the sludge water content from 90% to less than 10%, extensive evaporation is involved which requires high heat and mass transfer rates. Compared to rotary dryers and traveling grant dryers, a fluidized bed in which slurry is sprayed on the bed material and evaporation occurs on the surface of particles can provide much larger surface area for the heat and mass transfer, leading to much higher overall mass and heat transfer rates. The gas-solids contact can be further improved in a spout-fluid bed due to the high internal solids circulation inside the spout-fluid bed (Uemaki, O. and Tsuji, T., "Particle velocity and solids circulation rate in a jet-spouted bed", Can. J. Chem. Eng., 70, 925-928, 1992). As a result, spout-fluid bed dryers can provide a drying efficiency more than 10 times higher than spray dryers (Masters 1972; Markowski, A. and Kaminski, W., "Hydrodynamic characteristics of jet-spouted beds", Can. J. Chem. Eng., 61, 377-3811, 1983).

With reference to WO 80/01407 there is disclosed a drying system for drying wet slurry. This system utilizes a mixing box at a feed end of the mill to increase the solids contents in the range of 50 to 60 percent. The slurry is heated directly by a burner at a fixed high temperature. The burner also provides heat to a heat exchanger where effluent gases are preheated before being fed to the combustion chamber. Part of the treated effluent gases are fed to the heat exchanger for the preheating and part is fed directly to the mill. The effluent gases are not used to reduce, in a controlled manner, the temperature of the hot drying gas.

French Patents FR-A2 496 085 and FR-A 2 198 112 relate to fluidized bed dryers as described above with reference to the Canadian patents.

### SUMMARY OF INVENTION

There exists a need to develop a process to dry organic waste slurry or other type of industrial waste slurry and which is much more efficient than the prior art and which can destroy generated VOCs and odor gases at higher levels than previously achieved by the above referred-to drying processes and wherein the treatment capacity can be increased and further wherein the effluent gas is incinerated in a combustion chamber which also provides the hot air for the drying chamber.

According to the present invention there is provided a drying system for drying refuse slurry and which comprises a spout fluid-bed dryer housing having a conical section provided in at least a part thereof with a packing of heat exchange particles. Means is provided to feed refuse slurry to the packing. Inlet means is provided at a narrowed end of said conical section to admit a hot drying gas stream into said housing to heat the packing and to dry the slurry to produce dried slurry particles. The dried slurry particles are convected to a separation means where the dried slurry particles are separated. The system is characterized in that said effluent gases are fed in part to a high temperature combustion chamber to destroy volatile organic compounds and odor gases from the effluent gases before releasing, in the atmosphere, from a top portion of said high temperature combustion chamber a regulated amount of the treated gases which is now clean gases and for providing a high temperature combustion to a mixing chamber adjacent an outlet of the combustion chamber. An effluent gas inlet port is connected to the mixing chamber for admitting a regulated flow of another part of said effluent gases therein for admixture with the high temperature combustion gas stream to reduce the temperature of said high temperature combustion gas stream prior to convecting same to said housing to form said heat drying gas stream to heat said packing.

According to a further aspect of the present invention there is provided a method of treating a refuse slurry and for destroying volatile organic compounds and odor gases contained in the slurry, said method comprising the features according to claim 27.

### BRIEF DESCRIPTION OF DRAWINGS

A preferred embodiment of the present invention will now be described with reference to the accompanying drawings in which:
FIG. 1 is a schematic diagram showing the process of the present invention consisting of a spout-fluid bed dryer, a chamber for combustion, incineration and heat recuperation, a slurry feed circuit and the interconnecting pipe lines; and
FIG. 2 is a simplified schematic diagram showing the gas and air feed lines connected to the gas burner.

### DESCRIPTION OF PREFERRED EMBODIMENTS

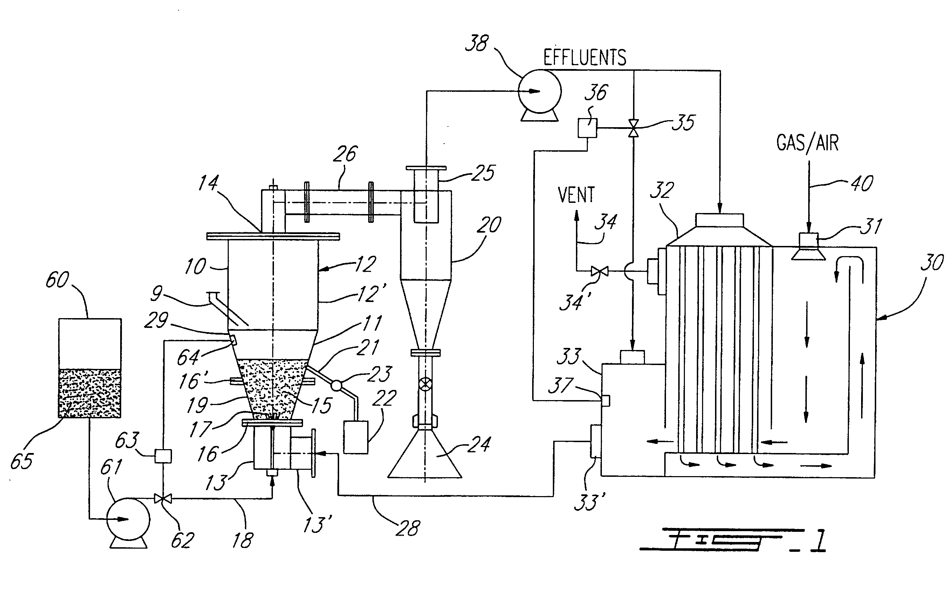

Referring now to the drawings and more particularly to Figure 1, there is shown generally at 10, the spout-fluid bed dryer of the present invention for producing dried fertilizer from organic refuse material having fertilizing properties. As can be seen it consists of a conical shape vertical housing 12 of circular cross-section, although other cross-sectional shapes are workable, and defining a circumferential side wall 12, a conical bottom chamber 11, an open bottom end 13 and a top end 14.

A packing 15 of particles is supported by a perforated distributor 16 in the conical section 11, although other types of distributors are workable, permitting the passage of air through the packing and from the bottom of the housing. A slurry discharge means in the form of spray nozzles 17, although other spray means are workable, is disposed below the packing 15, although it can also be mounted at the top or on the side walls of the housing, and connected to a pressure supply line 18 whereby to discharge slurry solution to the packing 15 for the evaporation of water within the housing conical section 11.

A distinct aspect of the design of this drying chamber is the use of a conical shape chamber 11 which promotes internal solids circulation and mixing, and thus prevents particles from sticking together at high slurry loading rates.

Another distinct aspect of the design of this conical chamber 11 is the division of the chamber into a lower section 19 and an upper section 29. With a distributor 16 located at the bottom of the lower section 19 and particle packing 15 above the distributor 16, the spout-fluid bed is operated in a jet-spouting mode which generates strong internal solids circulation and thus provide high gas and solids contacting. This enhances the evaporation of water and, on the other hand, promotes the breakup of formed film layers on the surface of particles from the deposition of slurry liquid. As a result, fine particles are generated continuously from this particle packing 15 and are elutriated by the air-vapor mixture to the top of the chamber and out of the chamber to the cyclone separator 20.

When the distributor 16' is located at the bottom of the upper section 29 of the chamber 11 and particle packing 15 is above the distributor 16', the bed is operated in a spout-fluidized bed mode with reduced internal solids circulation rate. As a result, the size of particles will grow up during the drying process due to the deposition of layers by layers of fine powders from the evaporation of slurry films sprayed to the particle surface. The drying chamber in such a case serves as both a dryer and a granulator. The generated large sludge particles may then be discharged continuously from the side wall of the housing through an inclined pipe 21 and directed to a receiver 22. The discharge rate may be controlled by a ball valve 23.

In the operation, the hot drying air is supplied to the bottom of the dryer from a pipe line 28, which connects a port 13' at the bottom end 13 of the dryer 10 to the outlet 33' of the mixing chamber 33 which will be described later. The slurry 65 is supplied to the spray nozzles 17 through a pipe line 18, which is connected to a slurry pump 61 and a slurry tank 60 with the flow rate of the slurry controlled by a controllable valve 62 and a modulating controller 63 responsive to the temperature of the drying chamber 11, and which temperature is measured by thermocouples 64.

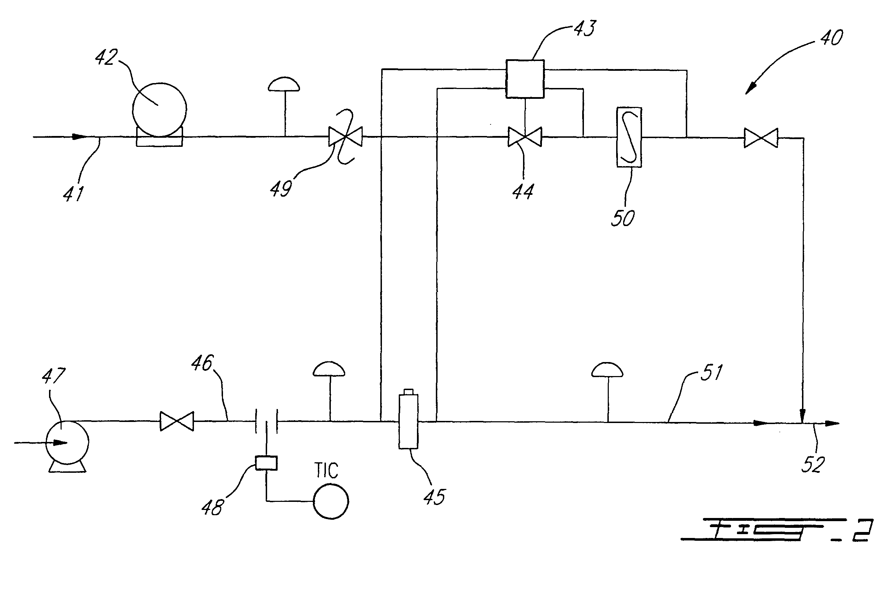

The sprayed slurry forms a thin film on the surface of particles within the packing 15 and water evaporation is realized by both the release of heat from the heated particles and from the contact with the hot drying air. The air and vapor mixture and elutriated particles rise up with the air current and leave the drying chamber from the top port 14, and are directed to a cyclone 20 wherein entrained dry particles are separated from the gas stream and collected from the bottom of the cyclone by a receiver 24. Effluent air and vapor stream leaves the cyclone from the top port 25 and are convected to an incinerator chamber 30, which will be described later with reference to Figure 2, to have the VOCs and odors destroyed.

A nutriment feed pipe 9 may also be positioned above the packing 15 to introduce into the housing 12 nutriments for admixture to the dried slurry particles to improve the fertilizing quality of the dried manure collected by the cyclone separator 20.

The proper evaporation of slurry in the drying chamber 11 is monitored by regulating the feeding rate of the slurry based on temperature within the particle layers of the packing 15 and the top freeboard region by using a series of thermocouples, although it is also workable to adjust the feeding rate of the drying air. The condensation of vapor in the connecting pipe line 26 is prevented by monitoring the temperature within the cyclone 20 to be higher than the dew point of the mixture by a thermocouple (not shown).

The combustion and incineration chamber 30 shown in Figure 1 is provided with a natural gas burner 31, a heat recuperator 32 and a mixing chamber 33. The natural gas, or other fuels, together with the combustion air, is supplied from a pipe line 40 which will be described in detail later with reference to Figure 2, to the burner 31 for the combustion. High temperature combustion gases then meets with the effluent gases which come from the drying chamber 11, compressed by a vapor fan 38 and fed into the combustion and incineration chamber 30 before preheated in a tube-shell type heat exchanger 32. To ensure complete removal of VOCs and odors contained in the effluent gases, the temperature of the incineration chamber is maintained above 750°C and the effluent gas stream has a residence time longer than 0.5 second. After passing the incineration chamber, one stream of the effluent gases goes into the shell side of the heat exchanger 32 to preheat the incoming effluent gases from the vapor fan 38 before it leaves the system through vent 34 at a temperature lower than 350°C. A valve 34' controls the discharge of the treated gases and balances the system. The vent 34 could be convected to heat exchange devices to extract heat therefrom for other uses. The other stream of the effluent gases is passed to a mixing chamber 33 to be mixed with another stream directly from the exit of the vapor fan 38. With the two streams well mixed in the mixing chamber, the mixture at a temperature of around 400°C goes to the bottom of the drying chamber 11 for the drying of the slurry solution 65. To control the temperature of mixture going to the mixing chamber 33, a controllable valve 35 is installed in the effluent air line with the flow rate controlled by a modulating controller 36 based on the temperature inside the mixing chamber 33 measured by a thermocouple 37. As can be seen the blower 38 convects the drying air flow and effluents in a closed loop from the top of the housing 12 to the bottom port 13', through the mixing chamber 33.

The distinct feature of such a combination of combustion-incineration-recuperation chamber is the energy saving. The combustion of natural gas in a single chamber provides energy for the preheating of incoming effluent gases, the incineration of effluent gases and provides moderate temperature gases for the drying chamber 11. Although only one heat recuperator is included in this diagram, it is also workable to have more heat exchangers to further recuperate energy from the down stream venting to the environment.

Figure 2 is a block diagram illustrating a typical configuration of the gas-air feed circuit 40. As herein shown a natural gas feed line 41 is connected to a pressure regulator 42 and feeds a modulating controller 43 connected to a controllable valve 44. Modulating controller 43 is also connected across the orifice 45 of an air pressure line 46 fed by a blower 47. The line is connected to an air valve 48 and also directly to the orifice 45. An electrovalve 49 is connected upstream of the controlled valve 44 and an adjustable orifice 50. The controlled valve 44 is controlled by the modulating controller which senses the amount of air being supplied in the feed line 51 so that a constant gas-air mixture may be fed to its outlet 52 which is connected to the feed pipe 40 of the burner 31. This feed circuit is substantially of standard design.

Although in the present application reference is made particularly to the treatment of organic refuse material such as animal manure, it is to the understood that the present invention should not be restricted thereto. In fact, dried fertilizers produced from suitable refuse material having fertilizing properties and to which nutriments may or may not be added is intended to be covered. For example, slurry from slaughter houses, municipal slurry obtained from water treatment facility or refuse dumps, human or pulp and paper or agricultural or bio-industrial slurries are examples of organic refuse capable of being treated by the system and method of this invention.

Other added value properties such as nutriment or energy can be produced from organic refuse material treated by the system and method of this invention.

Moreover other valuable extract can be produced from other industrial refuse material such as slurries from contaminated soil, petro-chemical, chemical, mineral, metallurgical, mining, and other industrial operations are examples of refuse material capable of being treated by the system and method of this invention.

## Claims

1. A drying system (10) for drying refuse slurry (65) said system comprising a spout fluid-bed dryer housing (12) having a conical section (11) provided in at least a part thereof with a packing of heat exchange particles (15), means to feed said refuse material slurry to said packing, inlet means (61) at a narrowed end (13) of said conical section to admit a hot drying gas stream (28) into said housing to heat said packing and to dry said slurry to produce dried slurry particles, said dried slurry particles being convected to a separation means (20) where said dried slurry particles are separated; characterized in that said effluent gases are fed in part to a high temperature combustion chamber (30) to destroy volatile organic compounds and odor gases from said effluent gases before releasing, in the atmosphere (34), from a top portion of said high temperature combustion chamber, a regulated amount of the treated gases which is now clean gases and for providing a high temperature combustion gas stream to a mixing chamber (33) adjacent an outlet of said combustion chamber; an effluent gas inlet port connected to said mixing chamber for admitting a regulated flow (35) of another part of said effluent gases therein for admixture with said high temperature combustion gas stream to reduce the temperature of said high temperature combustion gas stream prior to convecting (33', 28) same to said housing (12) to form said hot drying gas stream to heat said packing.

2. A drying system as claimed in claim 1 wherein said refuse slurry is an organic or industrial refuse slurry.

3. A drying system as claimed in claim 2 wherein said organic refuse material is animal manure, said slurry being a manure slurry.

4. A drying system as claimed in claim 2 wherein said organic refuse material has fertilizing properties.

5. A drying system as claimed in claim 1 wherein said means to feed said refuse material is a spraying apparatus (18) capable of producing a fine spray (17) of said refuse material.

6. A drying system as claimed in claim 1 wherein said combustion chamber is provided with a fuel burner (31).

7. A drying system as claimed in claim 1 wherein said separation means is a cyclone separator (20) to extract said dried slurry particles from said effluent gases to provide a solid fertilizer (24) from said slurry and which is substantially free of volatile organic compounds and odor gases.

8. A drying system as claimed in claim 2 wherein said organic refuse material is animal manure, said slurry being a manure slurry.

9. A drying system as claimed in claim 2 wherein said organic refuse material is human waste, said slurry being a human waste slurry, such as water treatment sludges or sceptic tank sludges.

10. A drying system as claimed in claim 2 wherein said organic refuse material is an industrial or petro-chemical or municipal or utility or agricultural or agro-food, or slaughterhouse organic waste, said slurry being an organic waste slurry.

11. A drying system as claimed in claim 2 wherein said refuse material is an industrial or mining or contaminated soil waste.

12. A drying system as claimed in claim 1 wherein said packing (15) of heat exchange particles is made of dried slurry particles.

13. A drying system as claimed in claim 1 wherein said packing (15) of heat exchange particles is supported in a bottom end portion (19) of said conical section on a perforated distributor plate member (16) and through which said hot drying gas stream passes.

14. A drying system as claimed in claim 13 wherein said means to feed said refuse material slurry is provided by one or more spray nozzles (17) operating in a jet-spouting mode and oriented at a bottom end of said packing to release a fine spray of said slurry into said packing for drying particles in said fine spray by contact with said heat exchange particles and/or hot drying gas stream.

15. A drying system as claimed in claim 14 wherein said hot drying gas stream is an air-vapor mixture.

16. A drying system as claimed in claim 1 wherein said packing (15) of heat exchange particles is supported in an upper end portion (29) of said conical section on a perforated distributor plate member (16') and through which said hot drying gas stream passes.

17. A drying system as claimed in claim 16 wherein said packing of heat exchange particles is made of dried slurry particles.

18. A drying system as claimed in claim 16 wherein said means to feed a fine spray of a slurry is provided by spray means oriented to release a fine particle spray of said slurry on said heat exchange particles whereby said slurry will build-up on said heat exchange particles as it dries up to produce large solid sludge particles which are discharged through discharge means (21) in a side wall of said housing (12) and conveyed to a receiver means (22) by gravity through a conduit having discharge rate control means (23).

19. A drying system as claimed in claim 6 wherein said combustion chamber (30) has a combustion section into which said effluent gases are released to destroy volatile organic compounds and odor gases from said effluent gases whereby to produce high temperature combustion gases, a natural gas burner (31), and a heat recuperator section (32) where a controlled amount of said high temperature combustion gases may be vented or convected for secondary use.

20. A drying system as claimed in claim 1 wherein said combustion chamber (30) is provided with convection pipes (32) extending from an inlet end of said chamber through said heat recuperator section to further heat said high temperature combustion gases, said combustion pipes being connected at an outlet end to a conduit means to release said effluent gases into said combustion section.

21. A drying system as claimed in claim 1 wherein said regulated flow of said effluent gases is provided by a controllable valve (35) and a modulating controller device (36), said controller device being fed signals by a thermocouple (37) sensing the temperature inside said mixing chamber whereby to control the flow rate of said effluent gases as a function of said temperature.

22. A drying system as claimed in claim 1 wherein said means to feed a fine spray of slurry is comprised by a slurry holding tank (60), a feed conduit, and a slurry pump (61) in said feed conduit; said feed conduit being connected to supply atomizing spray nozzles (17) associated with said packing (15), and control means (62, 63) to control the flow rate slurry.

23. A drying system as claimed in claim 22 wherein said control means (62, 63) comprises a modulating controller (63) regulating a controllable valve (62) connected in said feed conduit, a thermocouple (64) connected in said housing above said packing for sensing the temperature in said housing and feeding temperature responsive signals to said controller.

24. A drying System as claimed in claim 1 wherein said packing (15) is maintained at a temperature of at least 120°C by said hot drying gas whereby to destroy infectious bacteria contained in said dried slurry particles.

25. A drying system as claimed in claim 1 wherein said combustion chamber (30) is a catalytic combustion chamber or an incineration chamber.

26. A drying system as claimed in claim 1 wherein there is further provided a feeder inlet (9) to introduce into said fluid bed dryer housing nutriments for admixture to said dried slurry particles whereby to improve fertilizing qualities of said slurry particles for use as dried fertilizer.

27. A method of treating a refuse slurry to produce dried particles and for destroying volatile compounds and odor gases contained in said refuse slurry, said method comprising the steps of:
i) disposing a packing (15) of heat exchange particles in a conical section (11) above a feed port (17) at a narrowed end (16),
ii) heating said packing (15) to a predetermined temperature range by passing a hot drying gas stream (28) therethrough from said narrowed end,
iii) feeding a fine spray (17) of a refuse slurry to said packing,
iv) drying said slurry by evaporating its water content by contact with said heat exchange bodies (15) and hot drying gas stream (28), to produce dried slurry particles and effluent gases,
v) convecting (26) said dried slurry particles to a particle separator (20) for the extraction of said dried slurry particles, said method being characterized in that:
vi) part of said effluent gases are convected to a high temperature combustion chamber (30) to destroy volatile compounds and odor gases therefrom and releasing from a top portion of said combustion chamber a regulated amount of hot treated gases into the atmosphere (34) and to further provide a high temperature combustion stream to feed a mixing chamber (33) adjacent an outlet of said combustion chamber; and
vii) feeding to said mixing chamber a regulated flow (35) of another part of said effluent gases for admixture with said high temperature combustion stream to reduce the temperature of said gas stream prior to connecting (28) same to said housing (12) from said hot drying gas stream to heat said packing.

28. A method as claimed in claim 27 wherein said step (iii) comprises monitoring (64) the temperature within said housing (12) to control a controllable valve (62) in a feed conduit to regulate the flow rate of refuse slurry.

29. A method as claimed in claim 27 wherein said step (vi) further comprises convecting said effluent gases in conduit means in said combustion chamber (30), and feeding said heated and unpolluted air in contact with said conduit means to preheat (32) said effluent gas prior to releasing same in said combustion chamber.

30. A method as claimed in claim 27 wherein said step (v) comprises convecting said dried slurry particles and said effluent gases to a cyclone solid particle extractor (20) for the removal and collection (24) of said dried slurry particles.

31. A method as claimed in claim 27 wherein said step (vi) further comprises burning (31) a natural gas and air mixture (40) in said combustion chamber to maintain the temperature therein above 750°C, and convecting said effluent gases therein for a residence time of at least 0.5 second.

32. A method as claimed in claim 27 wherein there is further provided the step of introducing (9) in said fluid-bed drier nutriments for admixture with said dried slurry particles to improve fertilizing qualities of said slurry particles.

## Patentansprüche

1. Trocknungssystem (10) zur Trocknung von Schlamm-Abfall (65), wobei das System ein Sprudel-Wirbelschicht-Trocknergehäuse (12) mit einem konischen Abschnitt (11), der zumindest in einem Teil mit einer Packung von Wärmeaustauschpartikeln (15) versehen ist, Mittel zur Zuführung des Schlamm-Abfallmaterials zu der Packung, Einlaßmittel (61) an einem verjüngten Ende (13) des konischen Abschnitts, um einen heißen Trocknungsgasstrom (28) zur Aufheizung der Packung und zur Trocknung des Schlamms in das Gehäuse einzulassen, wobei getrocknete Schlammpartikel erzeugt werden, die Konvektion der getrockneten Schlammpartikel zu einem Abscheidungsmittel (20), wo die getrockneten Schlammpartikel abgeschieden werden, umfaßt, dadurch gekennzeichnet, daß die ausströmenden Gase teilweise einer Hochtemperaturverbrennungskammer (30) zugeführt werden, um flüchtige organische Verbindungen oder Geruchsgase in den ausströmenden Gasen zu zerstören, bevor von einem oberen Abschnitt der Hochtemperaturverbrennungskammer eine geregelte Menge der behandelten Gase, welche nun reine Gase sind, in die Atmosphäre (34) freigesetzt wird, und um eine Mischungskammer (33), die an einen Auslaß der Verbrennungskammer angrenzt, mit einem Hochtemperaturverbrennungsgasstrom zu versorgen; eine Einlaßöffnung für ausströmendes Gas vorhanden ist, welche mit der Mischungskammer verbunden ist, um einen geregelten Fluß (35) eines anderen Teils der ausströmenden Gase darin zur Zusammenmischung mit dem Hochtemperaturverbrennungsgasstrom einzulassen, um die Temperatur des Hochtemperaturverbrennungsgasstroms zu reduzieren, bevor dieser zu dem Gehäuse (12) konvektiert (33', 28) wird, um den heißen Trocknungsgasstrom für das Aufheizen der Packung zu bilden.

2. Trocknungssystem wie in Anspruch 1 beansprucht, worin der Schlamm-Abfall ein organischer oder industrieller Schlamm-Abfall ist.

3. Trocknungssystem wie in Anspruch 2 beansprucht, worin das organische Abfallmaterial tierischer Dung und der Schlamm tierischer Dungschlamm ist.

4. Trocknungssystem wie in Anspruch 2 beansprucht, worin das organische Abfallmaterial düngende Eigenschaften hat.

5. Trocknungssystem wie in Anspruch 1 beansprucht, worin das Mittel zur Zuführung des Abfallmaterials eine Sprühvorrichtung (18) ist, welche einen feinen Sprühnebel (17) des Abfallmaterials erzeugen kann.

6. Trocknungssystem wie in Anspruch 1 beansprucht, worin die Verbrennungskammer mit einem Brennstoffbrenner (31) ausgestattet ist.

7. Trocknungssystem wie in Anspruch 1 beansprucht, worin das Abscheidungsmittel ein Zyklonabscheider (20) zur Extraktion der getrockneten Schlammpartikel aus den ausströmenden Gasen ist, um einen festen Dünger (24) aus diesem Schlamm bereitzustellen und welcher im wesentlichen frei von flüchtigen organischen Verbindungen oder Geruchsgasen ist.

8. Trocknungssystem wie in Anspruch 2 beansprucht, worin das organische Abfallmaterial tierischer Dung und der Schlamm Dungschlamm ist.

9. Trocknungssystem wie in Anspruch 2 beansprucht, worin das organische Abfallmaterial menschlicher Abfall ist und der Schlamm inenschlicher Abfall-Schlamm wie Wasserbehaudlungsklärschlamm oder skeptischer Behälterschlamm ist.

10. Trocknungssystem wie in Anspruch 2 beansprucht, worin das organische Abfallmaterial ein industrieller oder petrochemischer oder kommunaler oder Nutz- oder landwirtschaftlicher oder Ackerbaunahrungsmittel- oder Schlachthof- organischer Abfall ist und der Schlamm ein organischer Abfall-Schlamm ist.

11. Trocknungssystem wie in Anspruch 2 beansprucht, worin das Abfallmaterial ein industrieller oder Bergbau- oder kontaminierter Boden-Abfall ist.

12. Trocknungssystem wie in Anspruch 1 beansprucht, worin die Packung (15) von Wärmeaustauschpartikeln aus getrockneten Schlammpartikeln besteht.

13. Trocknungssystem wie in Anspruch 1 beansprucht, worin die Packung (15) von Wärmeaustauschpartikeln in einem Bodenendabschnitt (19) des konischen Abschnitts auf einem perforierten Verteilerplattenbauteil (16) gehalten wird und durch welches der heiße Trocknungsgasstrom hindurchtritt.

14. Trocknungssystem wie in Anspruch 13 beansprucht, worin das Mittel zur Zuführung des Abfallmaterial-Schlamms durch eine oder mehrere Sprühdüsen (17) zur Verfügung gestellt wird, welche in einem Strahlspritz-Modus betrieben werden und so an einem Bodenende der Packung ausgerichtet sind, um einen feinen Sprühnebel des Schlamms in die Packung zur Trocknung von Partikeln in dem feinen Sprühnebel durch den Kontakt mit den Wärmeaustauschpartikeln und/oder dem heißen Trocknungsgasstrom freizusetzen.

15. Trocknungssystem wie in Anspruch 14 beansprucht, worin der heiße Trocknungsgasstrom eine Luft-Dampf Mischung ist.

16. Trocknungssystem wie in Anspruch 1 beansprucht, worin die Packung (15) von Wärmeaustauschpartikeln in einem oberen Endabschnitt (29) des konischen Abschnitts auf einem perforierten Verteilerplattenbauteil (16') gehalten wird und durch welches der heiße Trocknungsgasstrom hindurchtritt.

17. Trocknungssystem wie in Anspruch 16 beansprucht, worin die Pakkung der Wärmeaustauschpartikel aus getrockneten Schlammpartikeln besteht.

18. Trocknungssystem wie in Anspruch 16 beansprucht, worin das Mittel zur Zuführung eines feinen Sprühnebels eines Schlamms durch Sprühmittel zur Verfügung gestellt wird, welche so ausgerichtet sind, daß sie einen feinen Partikelsprühnebel des Schlamms auf die Wärmeaustauschpartikel freisetzen, wobei der Schlamm sich auf den Wärmeaustauschpartikeln während des Trocknens ansammeln wird, so daß große feste Schlammpartikel gebildet werden, welche durch Abführungsmittel (21) in einer Seitenwand des Gehäuses (12) abgeführt und mittels Gravitation durch eine Führung, welche Mittel zur Kontrolle der Abführungsrate (23) aufweist, zu einem Aufnahmemittel (22) überführt werden.

19. Trocknungssystem wie in Anspruch 6 beansprucht, worin die Verbrennungskammer (30) einen Verbrennungsabschnitt aufweist, in welchen die ausströmenden Gase zur Zerstörung von flüchtigen organischen Verbindungen und Geruchsgasen aus diesen ausströmenden Gasen freigesetzt werden, wobei zur Herstellung von Hochtemperaturverbrennungsgasen ein Naturgasbrenner (31) und ein Wärmerückgewinnungsabschnitt (32), worin eine kontrollierte Menge der Hochtemperaturverbrennungsgase für einen Sekundärgebrauch ventiliert oder konvektiert werden kann.

20. Trocknungssystem wie in Anspruch 1 beansprucht, worin die Verbrennungskammer (30) mit Konvektionsröhren (32), die sich von einem Einlaßende der Kammer durch den Wärmerückgewinnungsabschnitt erstrecken, ausgestattet ist, um die Hochtemperaturverbrennungsgase noch weiter aufzuheizen, wobei die Verbrennungsröhren an einem Auslaßende mit einem Führungsmittel verbunden sind, um die ausströmenden Gase in den Verbrennungsabschnitt freizusetzen.

21. Trocknungssystem wie in Anspruch 1 beansprucht, worin der geregelte Fluß der ausströmenden Gase durch ein steuerbares Ventil (35) und ein abstimmendes Kontrollgerät (36) zur Verfügung gestellt wird, wobei dem Kontrollgerät Signale von einem Thermoelement (37) zugeführt werden, das die Temperatur innerhalb der Mischungskammer fühlt, wobei die Flußrate der ausströmenden Gase als eine Funktion dieser Temperatur geregelt wird.

22. Trocknungssystem wie in Anspruch 1 beansprucht, worin das Mittel zur Zuführung eines feinen Sprühnebels an Schlamm einen Schlammhaltetank (60), eine Zuführungsleitung, und eine Schlammpumpe (61) in dieser Zuführungsleitung, wobei die Zuführungsleitung mit zerstäubenden Sprühdüsen, um diese zu versorgen, verbunden ist (17), die mit der Packung (15) assoziiert sind, und Kontrollmittel (62, 63) zur Steuerung der Flußrate des Schlamms umfaßt.

23. Trocknungssystem wie in Anspruch 22 beansprucht, worin das Kontrollmittel (62, 63) ein abstimmendes Kontrollinstrument (63), das ein regelbares Ventil (62), welches in der Zuführungsleitung angeschlossen ist, regelt, und ein Thermoelement (64), welches in dem Gehäuse oberhalb der Packung zur Fühlung der Temperatur im Gehäuse angekoppelt ist und dem Kontrollinstrument Signale zuführt, welche auf die Temperatur ansprechen, umfaßt.

24. Trocknungssystem wie in Anspruch 1 beansprucht, worin die Packung (15) durch die heißen Trocknungsgase auf einer Temperatur von mindestens 120 °C gehalten wird, wodurch infektiöse Bakterien, die in dem getrockneten Schlamm enthalten sind, zerstört werden.

25. Trocknungssystem wie in Anspruch 1 beansprucht, worin die Verbrennungskammer (30) eine katalytische Verbrennungskammer oder eine Veraschungskammer ist.

26. Trocknungssystem wie in Anspruch 1 beansprucht, worin des weiteren ein Einspeisungseinlaß (9) zur Verfügung gestellt wird, um in das Wirbelschichttrocknergehäuse Nährmittel zur Beimischung zu den getrockneten Schlammpartikeln einzuspeisen, wodurch die Düngemittelqualität der getrockneten Schlammpartikel zum Gebrach als getrocknetes Düngemittel erhöht wird.

27. Verfahren zur Behandlung von Schlamm-Abfall zur Herstellung von getrockneten Partikeln und zur Zerstörung von flüchtigen Verbindungen und Geruchsgasen, die in dem Schlamm-Abfall enthalten sind, wobei das Verfahren die folgenden Schritte umfaßt:
i) Anordnen einer Packung (15) von Wärmeaustauschpartikeln in einem konischen Abschnitt (11) oberhalb einer Zuführungsöffnung (17) an einem verjüngten Ende (16),
ii) Aufheizen der Packung (15) auf einen vorbestimmten Temperaturbereich durch das Hindurchtretenlassen eines heißen Trocknungsgasstroms (28) durch die Packung vom verjüngten Ende aus,
iii) Zuführen eines feinen Sprühnebels (17) eines Schlamm-Abfalls zu der Packung,
iv) Trocknen des Schlamms durch die Evaporierung von dessen Wassergehalt durch den Kontakt mit den Wärmeaustauschkörpern (15) und dem heißen Trocknungsgasstrom (28), um getrocknete Schlammpartikel und ausströmende Gase herzustellen,
v) Konvektion (26) der getrockneten Schlammpartikel zu einem Partikelabscheider (20) zur Extraktion der getrockneten Schlammpartikel, wobei dieses Verfahren dadurch gekennzeichnet ist, daß
vi) ein Teil der ausströmenden Gase zu einer Hochtemperaturverbrennungskammer (30) konvektiert wird, um flüchtige Verbindungen und Geruchsgase darin zu zerstören und um von einem oberen Abschnitt der Verbrennungskammer eine regulierte Menge an heiß-behandelten Gasen in die Atmosphäre (34) freizusetzen und des weiteren um einen Hochtemperaturverbrennungsstrom zur Zuführung zu einer Mischungskammer (33), die an einen Auslaß der Verbrennungskammer angrenzt, bereitzustellen; und
vii) ein geregelter Fluss (35) eines anderen Teils der ausströmenden Gase zu der Mischungskammer zur Zusammenmischung mit dem Hochtemperaturverbrennungsstrom zugeführt wird, um die Temperatur des Gasstroms zu reduzieren, bevor dieser mit dem Gehäuse (12) durch den heißen Trocknungsgasstrom in Verbindung gebracht wird (28), um die Packung aufzuheizen.

28. Verfahren wie in Anspruch 27 beansprucht, worin der Schritt (iii) die Beobachtung (64) der Temperatur innerhalb des Gehäuses (12) zur Steuerung eines regelbaren Ventils (62) in einer Zuführungsleitung zur Regulierung der Flußrate des Abfall-Schlamms umfaßt.

29. Verfahren wie in Anspruch 27 beansprucht, worin der Schritt (vi) weiter die Konvektion der ausströmenden Gase in Leitungsmitteln innerhalb der Verbrennungskammer (30), und die Zuführung der aufgeheizten und unverschmutzten Luft in den Kontakt mit den Leitungsmitteln zur Vorheizung (32) des ausströmenden Gases vor dem Freisetzen desselben in die Verbrennungskammer umfaßt.

30. Verfahren wie in Anspruch 27 beansprucht, worin der Schritt (v) die Konvektion der getrockneten Schlammpartikel und der ausströmenden Gase zu einem Zyklonabscheider für feste Partikel (20) zur Entfernung und Sammlung (24) der getrockneten Schlammpartikel umfaßt.

31. Verfahren wie in Anspruch 27 beansprucht, worin der Schritt (vi) weiter die Verbrennung (31) einer Naturgas-und-Luft-Mischung (40) in der Verbrennungskammer zur Aufrechterhaltung der Temperatur darin oberhalb von 750°C, und die Konvektion der ausströmenden Gase dort hinein für eine Aufenthaltszeit von wenigstens 0,5 Sekunden umfaßt.

32. Verfahren wie in Anspruch 27 beansprucht, worin weiter der Schritt der Einspeisung (9) von Nährmitteln in den Wirbelschichttrockner zur Beimischung zu den getrockneten Schlammpartikeln zur Verbesserung der Düngemittelqualität der Schlammpartikel vorgesehen ist.

## Revendications

1. Installation de séchage (10) permettant de sécher une suspension de rejets (65), l'installation comprenant une enceinte d'appareil de séchage à lit fluidisé à courants de recirculation (12) présentant une section conique (11) comportant, dans au moins une partie de celle-ci, un garnissage de particules d'échange de chaleur (15), des moyens d'introduction de la suspension de matière de rejets vers le garnissage, des moyens d'entrée (61) prévus à une extrémité plus étroite (13) de la section conique pour admettre un courant de gaz de séchage chaud (28) dans ladite enceinte afin de chauffer le garnissage et de sécher la suspension en vue de produire des particules de suspension séchée, les particules de suspension séchée circulant vers des moyens de séparation (20) dans lesquels les particules de suspension séchée sont séparées, caractérisée en ce que lesdits gaz effluents sont envoyés en partie vers une chambre de combustion à température élevée (30) afin de détruire des composés organiques volatils et des gaz ayant une odeur, provenant des gaz effluents, avant de relâcher dans l'atmosphère (34), à partir d'une partie supérieure de la chambre de combustion à température élevée, une quantité, soumise à une régulation, des gaz traités qui constitue désormais des gaz propres et afin de fournir un courant de gaz de combustion à température élevée à une chambre de mélange (33) adjacente à une sortie de la chambre de combustion; un orifice d'entrée de gaz effluents relié à la chambre de mélange pour admettre un écoulement (35), soumis à une régulation, d'une autre partie desdits gaz effluents dans celle-ci en vue d'un mélange avec le courant de gaz de combustion à température élevée en vue de réduire la température dudit courant de gaz de combustion à température élevée avant de le faire circuler (33', 28) vers ladite enceinte (12) afin de former ledit courant de gaz de séchage chaud en vue de chauffer le garnissage.

2. Installation de séchage telle que revendiquée à la revendication 1, dans laquelle la suspension de rejets est une suspension de rejets organiques ou industriels.

3. Installation de séchage telle que revendiquée à la revendication 2, dans laquelle la matière de rejets organiques est constituée de détritus animaux, la suspension étant une suspension de détritus.

4. Installation de séchage telle que revendiquée à la revendication 2, dans laquelle la matière de rejets organiques possède des propriétés fertilisantes.

5. Installation de séchage telle que revendiquée à la revendication 1, dans laquelle les moyens d'introduction de la matière de rejets sont constitués d'un appareil de pulvérisation (18) capable de produire une fine pulvérisation (17) de la matière de rejets.

6. Installation de séchage telle que revendiquée à la revendication 1, dans laquelle la chambre de combustion est pourvue d'un brûleur à combustible (31).

7. Installation de séchage telle que revendiquée à la revendication 1, dans laquelle les moyens de séparation sont constitués d'un séparateur à cyclone (20) servant à extraire les particules de suspension séchée à partir des gaz effluents afin de fournir un engrais solide (24) provenant de la suspension et qui est sensiblement dépourvu de composés organiques volatils et de gaz ayant une odeur.

8. Installation de séchage telle que revendiquée à la revendication 2, dans laquelle la matière de rejets organiques est constituée de détritus animaux, la suspension étant une suspension de détritus.

9. Installation de séchage telle que revendiquée à la revendication 2, dans laquelle la matière de rejets organiques est constituée de détritus humains, la suspension étant une suspension de détritus humains, tels que des boues de traitement des eaux ou des boues de cuve sceptique.

10. Installation de séchage telle que revendiquée à la revendication 2, dans laquelle la matière de rejets organiques est constituée de matières résiduelles organiques industrielles, pétrochimiques, de services municipaux, d'installations utilitaires, agricoles, agro-alimentaires ou d'abattoir, la suspension étant une suspension de matières résiduaires organiques.

11. Installation de séchage telle que revendiquée à la revendication 2, dans laquelle la matière de rejets est constituée de produits résiduaires industriels, d'exploitation minière ou de sol contaminé.

12. Installation de séchage telle que revendiquée à la revendication 1, dans laquelle le garnissage (15) de particules d'échange de chaleur est constitué de particules de suspension séchée.

13. Installation de séchage telle que revendiquée à la revendication 1, dans laquelle le garnissage (15) de particules d'échange de chaleur est soutenu dans une partie d'extrémité inférieure (19) de ladite section conique sur un élément de plaque de répartition (16), que traverse ledit courant de gaz de séchage chaud.

14. Installation de séchage telle que revendiquée à la revendication 13, dans laquelle les moyens d'introduction de la suspension de matière de rejets sont fournis par une ou plusieurs buses de pulvérisation (17) fonctionnant suivant un mode à courants de recirculation à jet et orientées vers une extrémité inférieure du garnissage de façon à relâcher une fine pulvérisation de la suspension dans le garnissage afin de sécher les particules dans la fine pulvérisation par le contacte avec les particules d'échange de chaleur et/ou le courant de gaz de séchage chaud.

15. Installation de séchage telle que revendiquée à la revendication 14, dans laquelle le courant de gas de séchage chaud est un mélange air-vapeur.

16. Installation de séchage telle que revendiquee a la revendication 1, dans laquelle le garnissage (15) de particules d'échange de chaleur est soutenu dans une partie d'extrémité supérieure (29) de ladite section conique sur un élément de plaque de répartition perforée (16'), que traverse le courant de gaz de séchage chaud.

17. Installation de séchage telle que revendiquée à la revendication 16, dans laquelle le garnissage de particules d'échange de chaleur est constitué de particules de suspension séchée.

18. Installation de séchage telle que revendiquée à la revendication 16, dans laquelle les moyens d'introduction d'une fine pulvérisation d'une suspension sont fournis par des moyens de pulvérisation orientés de façon à relâcher une fine pulvérisation de particules de la suspension sur les particules d'échange de chaleur, de sorte que la suspension va s'accumuler sur les particules d'échange de chaleur au fur et à mesure qu'elle sèche de façon à produire de grandes particules de suspension solide qui sont évacuées par des moyens d'évacuation (21) situés dans une paroi latérale de l'enceinte (12) et transportées vers des moyens formant réceptacle (22) par graviter en passant par une conduite comportant des moyens de réglage de débit d'évacuation (23).

19. Installation de séchage telle que revendiquée à la revendication 6, dans laquelle la chambre de combustion (30) comporte une section de combustion dans laquelle les gaz effluents sont relâchés de façon à détruire les composants organiques volatils et les gaz ayant une odeur à partir desdits gaz effluents, afin de produire des gaz de combustion à température élevée, un brûleur à gaz naturel (31) adapté et une section de récupération de chaleur (32) dans laquelle une quantité réglée des gaz de combustion à température élevée peuvent être mis à l'atmosphère ou être mis en circulation en vue d'une utilisation secondaire.

20. Installation de séchage telle que revendiquée à la revendication 1, dans laquelle la chambre de combustion (30) est pourvue de tubes de convection (32) s'étendant à partir d'une extrémité d'entrée de la chambre en traversant la section de récupération de chaleur de façon à chauffer davantage les gaz de combustion à température élevée, les tubes de convection étant reliés, à une extrémité de sortie, à des moyens formant conduit pour relâcher les gaz effluents dans la section de combustion.

21. Installation de séchage telle que revendiquée à la revendication 1, dans laquelle l'écoulement des gaz effluents, soumis à une régulation, est pourvu d'une valve réglable (35) et d'un dispositif régulateur de modulation (36), le dispositif régulateur étant alimenté en signaux par un thermocouple (37) détectant la température à l'intérieur de la chambre de mélange, de façon à régler le débit des gaz effluents en fonction de ladite température.

22. Installation de séchage telle que revendiquée à la revendication 1, dans laquelle les moyens d'introduction d'une fine pulvérisation de suspension sont constitués d'un réservoir de stockage de suspension (60), d'une conduite d'introduction et d'une pompe à suspension (61) située dans la conduite d'introduction ; la conduite étant reliée à des buses de pulvérisation d'atomisation d'apport (17) associées au garnissage (15), et des moyens de réglage (62, 63) pour régler le débit de suspension.

23. Installation de séchage telle que revendiquée à la revendication 22, dans laquelle les moyens de réglage (62, 63) comprennent un régulateur de modulation (63) assurant le réglage d'une valve réglable (62) montée dans la conduite d'introduction, un thermocouple (64) monté dans l'enceinte au-dessus du garnissage pour détecter la température dans l'enceinte et envoyer au régulateur des signaux fonction de la température.

24. Installation de séchage telle que revendiquée à la revendication 1,. dans laquelle le garnissage (15) est maintenu à une température d'au moins 120 °C par les gaz de séchage chauds, de façon à détruire les bactéries infectieuses contenues dans les particules de suspension séchée.

25. Installation de séchage telle que revendiquée à la revendication 1, dans laquelle la chambre de combustion (30) est une chambre de combustion catalytique ou une chambre d'incinération.

26. Installation de séchage telle que revendiquée à la revendication 1, dans laquelle il est en outre prévu une entrée d'alimentation (9) pour introduire, dans l'enceinte à appareil de séchage à lit fluidisé, des éléments nutritifs destinés à être mélangés aux particules de suspension séchée, afin d'améliorer les qualités fertilisantes des particules de suspension en vue d'une utilisation en tant qu'engrais séché.

27. Procédé de traitement d'une suspension de rejets pour produire des particules séchées et pour détruire des composés volatils et des gaz ayant une odeur contenus dans la suspension de rejets, le procédé comprenant les opérations consistant :
i) à disposer un garnissage (15) de particules d'échange de chaleur dans une section conique (11) au-dessus d'un orifice d'introduction (17) situé à une extrémité plus étroite (16),
ii) à chauffer le garnissage (15) jusqu'à une fourchette de températures prédéterminée en faisant passer un courant de gaz de séchage chauds (28) à travers lui à partir de l'extrémité plus étroite,
iii) à introduire une fine pulvérisation (17) d'une suspension de rejets vers le garnissage,
iv) à sécher la suspension en évaporant sa teneur en eau par contact avec les corps d'échange de chaleur (15) et le courant de gaz de séchage chaud (28), de façon à produire des particules de suspension séchée et des gaz effluents,
v) à faire circuler (26) les particules de suspension séchée vers un séparateur de particules (20) pour l'extraction desdites particules de suspension séchée, le procédé étant caractérisé en ce que :
vi) une partie des gaz effluents circulent vers une chambre de combustion à température élevée (30) afin de détruire les composés volatils et, les gaz ayant une odeur à partir de ceux-ci et à relâcher, à partir d'une partie supérieure de la chambre de combustion, une quantité de gaz traités chauds, soumise à une régulation, dans l'atmosphère (34) et à fournir en outre un courant de combustion à température élevée pour qu'il soit introduit dans une chambre de mélange (33) adjacente à une sortie de la chambre de combustion ; et
vii) à introduire dans la chambre de mélange un écoulement (35), soumis à une régulation, d'une autre partie des gaz effluents en vue d'un mélange avec ledit courant de combustion à température élevée afin de réduire la température dudit courant de gaz avant d'envoyer (28) celui-ci à l'enceinte (12) en provenance du courant de gaz de séchage chauds afin de chauffer le garnissage.

28. Procédé tel que revendiqué à revendication 27, selon lequel l'opération (iii) comprend une surveillance (64) de la température dans l'enceinte (12) afin de régler une valve réglable (62) située dans une conduite d'introduction en vue d'assurer une régulation du débit de suspension de rejets.

29. Procédé tel que revendiqué à la revendication 27, selon leqùel l'opération (vi) comprend en outre une circulation des gaz effluents, dans les moyens formant conduit, vers la chambre de combustion (30), et une introduction de l'air chauffé et non pollué en contact avec les moyens formant conduit afin de préchauffer (32) les gaz affluents avant de relâcher ceux-ci dans la chambre de combustion.

30. Procédé tel que revendiqué à la revendication 27, selon lequel l'opération (v) comprend une circulation des particules de suspension séchée et des gaz effluents vers un extincteur de particules solides à cyclone (20) afin d'extraire et recueillir (24) les particules de suspension séchée.

31. Procédé tel que revendiqué à la revendication 27, selon lequel l'opération (vi) comprend en outre la combustion (31) d'un mélange de gaz naturel et d'air (40) dans la chambre de combustion afin de maintenir la température dans celle-ci au-dessus de 750 °C et la circulation des gaz effluents dans celle-ci pendant un temps de séjour d'au moins 0,5 seconde.

32. Procédé tel que revendiqué à la revendication 27, selon lequel il est en outre prévu l'opération consistant à introduire (9), dans l'appareil de séchage à lit fluidisé, des éléments nutritifs en vue d'un mélange avec les particules de suspension séchée afin d'améliorer les qualités fertilisantes desdites particules de suspension.
